# EUROPEAN PATENT APPLICATION

(11) **EP 0 959 306 A2**
(43) Date of publication of application: **24.11.1999**
(21) Application number: 99303978.3
(22) Date of filing: 21.05.1999
(51) Int. Cl.: F24D 13/02

(54) **Heated floor for buildings**

(30) Priority: 22.05.1998 GB 9811144
(71) Applicant: Multi- Sportswall Limited, Marlborough, Wiltshire SN8 2EN (GB)
(72) Inventor: Liddiard, Peter Thomas,, Marlborough, Wiltshire, SN8 2EN (GB)
(74) Representative: Beresford, Keith Denis Lewis

(57) **Abstract**

An electrically heated floor structure for a building or a part thereof, is provided which is simple to install, does not require any wet trades to be involved in the installation, and is ready for immediate use. The floor structure comprises:
(a) panels or slabs 12 of Rockwool or other mineral fibres having cable-receiving grooves 14 formed in a pattern in their intended upper faces;
(b) one or more electrical heating cables 16 running through the grooves, and
(c) an over-layer 20 of heat-retentive inert material, for example cement particle board, which provides a smooth support surface.

## Description

The present invention relates to a heated floor for a building, or a room in a building, to materials for use in laying the floor and to a method of laying a floor using the materials as aforesaid.

A water-heated floor structure is known in which water pipes run through grooves cut in the top face of a layer of plastics foam material, the foam being covered with a thermally conductive upper layer which conceals the pipes and grooves (see DE-A-4433119 and EP-A-0025959). The foam provides a support for the pipes which can accommodate thermal movement of the pipes and differential expansion of the pipes and surrounding material.

Electrically heated flooring is known in which heating cables are buried in cement or concrete. However, the cement or concrete is labour-intensive and messy to install and takes time to set and dry out.

A problem with which the invention is concerned is to provide an electrically heated floor structure for a building or a part thereof, which is simple to install, does not require any wet trades to be involved in the installation, and is ready for immediate use.

The problem is solved by providing a floor structure comprising:
(a) panels or slabs of mineral fibres having cable-receiving grooves formed in a pattern in their intended upper faces;
(b) one or more electrical heating cables running through the grooves, and
(c) an over-layer of heat-retentive inert material which provides a smooth support surface.

The invention also provides a kit of parts for making a floor as aforesaid, said kit comprising plurality of slabs of mineral fibre for forming a base layer, said slabs having their intended upper surface formed with grooves disposed in a pattern,
a heating cable for fitting in the grooves, and
at least one sheet of upper layer material for laying on the base layer to cover the heating cable and the grooves.

The invention also provides a method for forming an electrically heated floor which comprises laying on a floor base the materials defined above.

For use in the above method, the invention also provides a mineral fibre slab or panel having a pattern of grooves in one face thereof for receiving an electrical heating cable.

How the invention may be put into effect will now be described, by way of example only, with reference to the accompanying drawings, in which:
Figure 1 is a diagrammatic plan of a room in a domestic house or other building having a floor provided with a single underfloor heating cable;
Figure 2 is a view similar to Figure 1, but showing two heating cables for different zones of the room; and
Figure 3 is a perspective view of a region of the floor with the upper layer partly cut away.

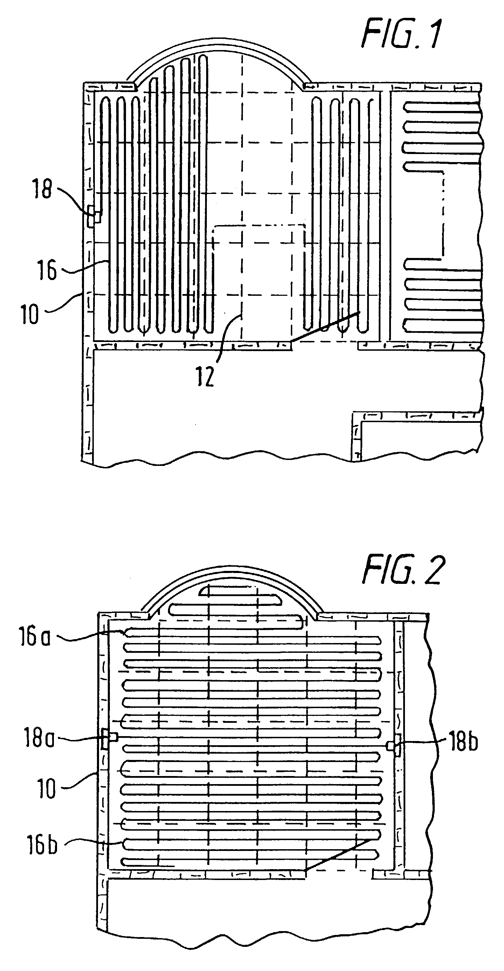

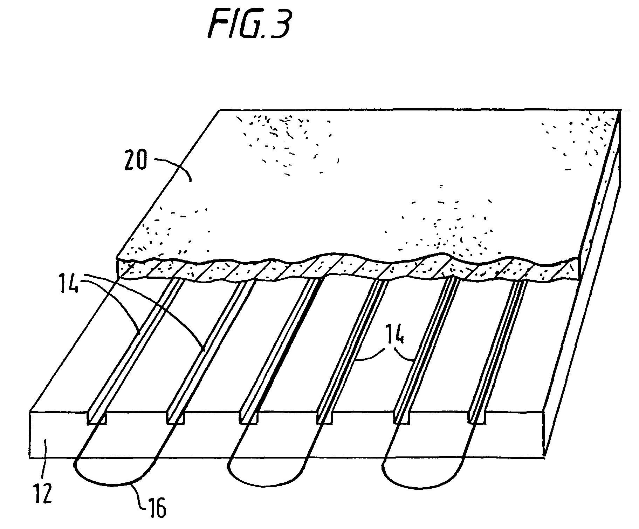

In Figure 1, there is shown a room 10 having a sub-floor which may be of concrete, cement, timber or steel joisting with wooden boards or chipboard, or may be a beam and block floor. The sub-floor is covered in a pattern with slabs or panels of Rockwool or other mineral fibre material. Rockwool is strong, non-flammable and has low sound transmission and it may be provided as square or rectangular slabs which can be provided with or formed by cutting with a pattern of grooves 14. A suitable slab 12 is shown in Figure 3. It is suitably of depth 30mm, thermal conductivity of 0.036 and is formed on an intended upper face with a pattern of parallel grooves 14 of width and depth 7mm which can easily be cut e.g. by means of a beam saw. If there is a need to interconnect adjacent grooves of the slab, the necessary cross-channels between adjacent grooves can easily be cut on site. Alternatively, cross-channels may be preformed in the slab surface.

A twin conductor screened heating cable 16 may be laid into or threaded through some or all of the grooves 14. In areas where low heat output is required the cable may be laid in alternate grooves in the parallel array, or in every third or fourth groove etc. Where maximum heat output is required, the cable may be laid into each groove in the array. The grooves are preferably 50mm apart, allowing a maximum length of 20m of heating cable per square metre of floor area, but grooves may be spaced more closely if higher power output per square metre is required. The heating cable may suitably have a thermal output of about 17 W/linear metre and may be arranged to provide 100-150 W/m² of power by spacing the cable runs to ensure that each square metre of floor has from about 6 to about 9 metres of heating cable. The intention is that the cable should be able to heat the floor to temperatures in the range 17-25°C, but should not permit the floor temperature to rise above 43°C. The cable is fed with power from a connector 18 and its operation may be controlled by a thermostat (not shown). The thermostat may be mounted to a wall of a room heated by the underfloor heating installation. The thermostat may have a first sensor responsive to room temperature and a second sensor located in a core in the slab 12 between adjacent turns of the cable 16. With this arrangement, the thermostat can turn power to the cable off (a) if the air temperature in the room has risen to a preset value, and in the event that expected heat dissipation from the floor into the air of the room is impeded if the temperature underneath a covering layer 20 rises above a safety value e.g. 43°C.

After the cable 16 is installed, the floor is completed by the covering layer 20. In the embodiment shown, the covering layer 20 is of smooth cement particle board of thickness about 16mm, compressive strength 15 N mm² and density 1250 kg m². In addition to providing a load carrying surface layer, the cement particle board is resistant to rot and to impact damage, of high heat capacity and provides a heat storage function. The covering layer 20 may be of any other suitable material such as stone or concrete slabs, or metal sheet.

Over the layer 20 there may be provided an over-layer of any conventional type, for example carpet, tiles or wood.

In the arrangement shown in Figure 1 there is a single heating cable 16 which passes sinuously through the grooves. For larger spaces, the room 10 may be divided into separate zones having individual heating cables 16a, 16b provided with power from respective outlets 18a, 18b as shown in Figure 2. Each heating cable 16a, 16b may have its own thermostat controller, and separate power supply.

When a floor is to be laid, the customer may inform his builder's merchant or other distribution outlet of the number of rooms where floors are to be laid and the sizes of them. The retailer will then provide a kit comprising the appropriate number of base layer slabs or panels, the heating cable, panels to form the upper layer and any required additional equipment e.g. a thermostat. Alternatively kits may be provided in standard room sizes e.g. for fitting into a conservatory or other house extension. The heated floor may be installed very rapidly without cement or other wet trades becoming involved, and is ready for testing and fitting of tiles, a carpet or other decorative surface and for walking on almost immediately thereafter.

## Claims

1. An electrically heated floor for a building, said floor comprising a base layer having an upper surface formed with grooves disposed in a pattern, a heating cable extending in at least a portion of the grooves of the pattern, and an upper layer on the base layer which covers the heating cable and grooves, wherein the base layer is of mineral fibres.

2. The floor of claim 1, wherein the base layer comprises at least one slab of rock-wool.

3. The floor of claim 1 or 2, wherein the slab is about 30mm deep.

4. The floor of any preceding claim, wherein the grooves are generally parallel to one another at a spacing of about 50mm.

5. The floor of any preceding claim wherein cross-channels are formed in the base layer to interconnect adjacent grooves.

6. The floor of any preceding claim, wherein the grooves are about 7mm in width and 7mm in depth.

7. The floor of any preceding claim, wherein the cable is a twin conductor screened cable.

8. The floor of any preceding claim, wherein the cable has a power output of 10-20 W/linear metre.

9. The floor of claim 7, wherein the cable has a power output of about 17 W/linear metre.

10. The floor of any preceding claim, wherein the cable is disposed so as to provide a power density of 100-150 W/m².

11. The floor of any preceding claim, wherein the upper layer is of cement bonded particle board.

12. The floor of claim 10, wherein the particle board is of thickness 12-16mm.

13. A kit of parts for an electrically heated floor for a building, said kit comprising:
a plurality of slabs of mineral fibre for forming a base layer, said slabs having their upper surface formed with grooves disposed in a pattern,
a heating cable for fitting in the grooves, and
at least one sheet of upper layer material for laying on the base layer to cover the heating cable and the grooves.

14. The kit of claim 13, wherein the base layer slabs are of rock-wool.

15. The floor of claim 13 or 14, wherein the slabs are about 30 mm deep.

16. The kit of any of claims 13-15, wherein the grooves are generally parallel to one another at a spacing of about 50 mm.

17. The kit of any of claims 13-16, wherein the grooves are about 7 mm in width and 7 mm in depth.

18. The kit of any of claims 13-17, wherein the cable is a twin conductor screened cable.

19. The kit of any of claims 13-18, wherein the cable has a power output of 10-20 W/linear metre.

20. The kit of claim 19, wherein the cable has a power output of about 17 W/linear metre.

21. The kit of any of claims 13-20, wherein the upper layer is of cement bonded particle board.

22. The kit of claim 21, wherein the particle board is of thickness 12-16 mm.

23. A method of forming an electrically heated floor which comprises laying on a floor base the materials defined in any of claims 13-22.

24. The method of claim 23, wherein the floor is laid on a concrete or cement base.

25. The method of claim 23, wherein the floor is laid on a base supported by joists of timber or steel.

26. An electrically heated floor for a building, said floor comprising a base layer having an upper surface formed with grooves disposed in a pattern, a heating cable in the grooves, and an upper layer on the base layer which covers the heating cable and the grooves, wherein the upper layer is of a cement bonded particle board or other cement based wood derived board.

27. The floor of claim 26, wherein the particle board is of thickness 12-16 mm.

28. A mineral fibre slab or panel having a pattern of grooves in one face thereof for receiving an electrical heating cable.
